# FASCICULE DE BREVET EUROPEEN

(11) **EP 0 975 411 B1**
(45) Date de publication et mention de la délivrance du brevet: **25.09.2002**
(21) Numéro de dépôt: 98921563.7
(22) Date de dépôt: 17.04.1998
(51) Int. Cl.: B01D 35/30

(54) **FILTRE ET CARTOUCHE DE FILTRAGE A BUTEE PERIPHERIQUE POUR LE FILTRAGE DE LIQUIDES CIRCULANT DANS UN MOTEUR OU DANS UN EQUIPEMENT HYDRAULIQUE**
FILTER UND FILTERKARTUSCHE MIT ÄUSSEREM ANSCHLAG FÜR DIE FILTRATION VON FLÜSSIGKEITEN, DIE IN EINEM MOTOR ODER EINER HYDRAULIK ZIRKULIEREN
FILTER AND FILTER CARTRIDGE WITH PERIPHERAL STOP FOR FILTERING LIQUIDS CIRCULATING IN AN ENGINE OR IN A HYDRAULIC EQUIPMENT

(30) Priorité: 18.04.1997 FR 9705041
(43) Date de publication de la demande: 02.02.2000
(73) Titulaire: FLEETGUARD, 29556 Quimper Cédex 9 (FR)
(72) Inventeur: GUICHAOUA, Jean-Luc, F-29120 Combrit (FR); PICARD, Jean-Yves, F-29000 Quimper (FR); LE ROUX, Benoît, F-29170 Fouesnant (FR)
(74) Mandataire: Vidon, Patrice
(86) Numéro de dépôt international: FR9800786
(87) Numéro de publication internationale: WO98047597

(56) Documents cités:
- DE-A- 4 105 074
- DE-A- 4 428 771

## Description

Le domaine de l'invention est celui du filtrage d'un liquide, notamment l'huile, le carburant ou le liquide de refroidissement, circulant dans un moteur, en particulier dans un moteur thermique, ou dans un équipement hydraulique.

Plus précisément, l'invention concerne un filtre du type comprenant une cuve accueillant une cartouche de filtrage et pouvant être fermée par un élément de fermeture. ladite cartouche de filtrage étant amovible et pouvant être remplacée après un certain temps d'usage d'après la vevendication 1 et une cartouche de filtrage selon la revendication 11. Ce type de cartouche présente généralement une forme tubulaire et délimite, au sein du filtre, un compartiment amont de filtration et un compartiment aval de filtration. Il existe ainsi des filtres dans lesquels le compartiment amont de filtration est formé entre la paroi intérieure de la cuve et l'extérieur de la cartouche alors que le compartiment aval de filtration est constituée par la chambre interne de la cartouche, alors qu'inversement, dans d'autres types de filtres c'est la chambre interne de la cartouche qui constitue le compartiment amont de filtration, le compartiment aval étant formé entre la paroi intérieure de la cuve et la paroi extérieure de la cartouche.

Dans certains types de moteurs, la cuve du filtre est intégrée au bloc moteur et fermée par un couvercle qui peut être ôté pour accéder à la cartouche de filtrage, tandis que dans d'autres types de moteur, c'est la cuve du filtre qui est amovible et qui peut être vissée sur une "tête de filtre" intégrée au bloc-moteur. Dans la présente description on entend donc les termes "élément de fermeture" comme visant, soit le couvercle mentionné ci-dessus, soit la tête de filtre.

Lorsque la cartouche placée dans la cuve est usagée, c'est-à-dire lorsque l'élément filtrant ne remplit plus son rôle de filtration de façon satisfaisante, selon les cas on ôte le couvercle ou on sépare la cuve de la tête de filtre, on ôte la cartouche usagée de la cuve, on la remplace par une nouvelle cartouche et on replace la couvercle ou on replace la cuve contre la tête de filtre.

Par la suite, les cartouches usagées sont incinérées de façon à détruire les matières polluantes organiques et concentrer les matières polluantes inorganiques. Dans le but d'optimiser un telle opération, il a été proposé dans l'état de la technique de réaliser celles-ci à partir de matériaux "verts" pouvant être incinérés en donnant un minimum de matières polluantes. De telles cartouches "vertes" présentent un matériau filtrant mono-couche ou multi-couches (également appelé "médium" dans le langage de l'homme de l'art) constitué par exemple de papier, de carton, de tissu ou de fibres tissées ou non tissées (ou d'un mélange ou d'une superposition de tels matériaux, dont une couche peut être une couche support), le plus souvent plissé en étoile, et de deux flasques d'extrémité en matériau non-métallique qui préférentiellement ne sont reliés entre eux par aucune liaison rigide autre que le medium, ce qui facilite encore leur incinération, la suppression d'un tel élément rigide permettant de diminuer notablement la proportion de matériau plastique nécessaire à la fabrication de telles cartouches. Dans le cas de la présence d'un matériau support, celui-ci peut être rigide ou de flexibilité choisie.

Le fonctionnement de ce genre de filtre est le suivant : le liquide à filtrer (par exemple de l'huile) est introduit par un orifice d'admission, arrive dans le compartiment amont de filtration, passe à travers un élément filtrant de la cartouche qui retient les particules se trouvant en suspension dans le liquide, puis le liquide ainsi filtré passe dans le compartiment aval de filtration, et sort par un orifice d'évacuation.

De façon classique, l'étanchéité de la cuve avec l'élément de fermeture est assurée par un joint d'étanchéité qui doit être positionné par l'utilisateur. Afin de faciliter la pose de la cartouche et d'éviter la manipulation d'un tel joint d'étanchéité, il a également été proposé dans l'état de la technique d'intégrer un tel joint d'étanchéité à la périphérie d'un des flasques de la cartouche elle-même, cette partie de flasque étant bloquée lors de la pose entre le couvercle et la cuve.

Un des inconvénients lié à l'utilisation de ce genre de filtre apparait lors de l'opération de serrage de la cuve avec l'élément de fermeture.

Ce serrage peut, selon les différents types de filtres connus, être effectué notamment par vissage direct de la cuve avec l'élément de fermeture ou encore par boulonnage. Or, dans la majorité des filtres, il est tres difficile pour l'utilisateur d'obtenir le bon serrage, c'est-à-dire un serrage suffisamment fort pour permettre de garantir l'étanchéité assurée par le joint prévu entre la cuve et l'élément de fermeture mais pas trop fort pour ne pas détériorer les qualités du joint en question, ni déformer, voire endommager l'élément de fermeture ou la cuve.

Ainsi, en règle générale, l'utilisateur à tendance soit à trop serrer la cuve et l'élément de fermeture de celle-ci, ce qui conduit à diminuer les capacités d'étanchéité du filtre et, en corollaire, la durée de vie de celui-ci, soit à ne pas serrer suffisamment ce qui peut conduire à des fuites, le joint n'assurant alors qu'imparfaitement sa fonction..

Dans les filtres mettant en oeuvre un boulonnage de l'élément de fermeture sur la cuve à l'aide de plusieurs boulons, le serrage obtenu est de plus généralement mal réparti entre les différents boulons, ce qui accroit les risques de fuites ou de détérioration du joint d'étanchéité. Ce problème est accru du fait que cette opération de serrage doit être effectuée à l'aide d'un outil, ce qui rend encore plus difficile le dosage du serrage.

Afin de répondre à ce problème, il a déjà été proposé dans l'état de la technique de prévoir un joint d'étanchéité entre l'élément de fermeture et la cuve. Une telle solution présente toutefois l'inconvénient de mettre en oeuvre un joint d'étanchéité non intégré à la cartouche de filtrage mais aussi celui d'impliquer un contact entre le métal de l'élément de fermeture et le métal de la cuve, un tel contact pouvant conduire à un grippage. Enfin, une telle solution nécessite un couple de serrage important. Le document DE-A- 4 428 771 décrit un filtre à cuve avec des positions de butée entre cuve et couvercle.

L'objectif de la présente invention est de proposer une solution technique au problème mentionné ci-dessus.

Plus précisément, l'objectif de l'invention est de décrire une telle solution technique permettant l'emploi d'un joint intégré au second flasque de la cartouche de filtrage et permettant d'assurer un serrage homogène et franc de l'élément de fermeture avec la cuve, selon un couple de serrage modéré pouvant être obtenu manuellement.

Cet objectif est atteint grâce à l'invention qui concerne un filtre pour liquide circulant dans un bloc-moteur ou dans un équipement hydraulique incluant une cuve coopérant avec un élément de fermeture et une cartouche de filtrage insérée dans ladite cuve et calée dans celle-ci par serrage dudit élément de fermeture avec ladite cuve, ladite cartouche étant du type comprenant un matériau filtrant terminé à l'une de ses extrémités par un premier flasque et à l'autre de ses extrémités par un second flasque dont la partie périphérique est destinée à être bloquée entre ladite cuve et ledit élément de fermeture lors du serrage de cette cuve avec ledit élément de fermeture,
caractérisé en ce que la partie périphérique du second flasque est pourvue d'un joint intégré périphérique et en ce que le filtre inclut au moins un élément formant butée prévu sur ledit second flasque et/ou sur ledit élément de fermeture et/ou sur ladite cuve, ledit élément formant butée étant conçu pour maitriser ledit serrage de ladite cuve avec ledit élément de fermeture.

Un tel élément de butée permet à l'utilisateur de savoir à quel moment le serrage idéal de l'élément de fermeture avec la cuve est atteint. On notera qu'un tel serrage sera généralement effectué par vissage, ce vissage ayant lieu selon les cas en vissant l'élément de fermeture (couvercle) sur la cuve, lorsque celle-ci sera solidarisée à la tête de filtre, ou en vissant la cuve sur la tête de filtre constituant alors ledit élément de fermeture. Dans le premier cas, l'invention pourra aussi être mise en oeuvre lorsque le couvercle sera boulonné sur la cuve.

De plus, un tel élément de butée permet d'utiliser un couple de serrage modéré autorisant un serrage efficace à la main et induisant une sensation franche de serrage. Cet élément de butée permet donc d'éviter tous les problèmes liés à un serrage trop fort ou insuffisant mentionnés ci-dessus.

Il pourra être envisagé de réaliser l'élément de butée selon l'invention sur un des flasques de la cartouche de filtrage, par exemple grâce à un ou plusieurs éléments faisant saillie de sa surface, ou de former cet élément de butée grâce à au moins un élément faisant saillie de l'élément de fermeture et/ou de la cuve (au niveau du bord d'ouverture de celle-ci).

Ainsi selon une première variante, ledit élément formant butée est prévu sur ladite partie périphérique dudit second flasque de ladite cartouche de filtrage.

Selon une autre variante, ledit élément formant butée comprend au moins un élément faisant saillie dudit élément de fermeture et ou de ladite cuve (au niveau du bord d'ouverture de celle-ci).

On notera que ces deux variantes pourront être combinées, l'un des élément pouvant faire saillie d'un flasque de la cartouche de filtrage et l'autre de l'élément de fermeture ou de la cuve.

Ladite partie périphérique dudit second flasque est pourvue d'un joint intégré. Un tel joint intégré peut par exemple recouvrir de part et d'autre le bord de la partie périphérique du second flasque. Un tel type de joint présente l'avantage d'être présent sur la cartouche et ainsi de faciliter la pose et le changement de celle-ci, aucune manipulation supplémentaire du joint n'étant nécessaire à l'utilisateur.

Préférentiellement ledit élément de butée est circulaire. On pourra aussi envisager de réaliser ladite butée sous d'autres formes, par exemple sous forme de plusieurs arcs-de-cercle.

Selon un mode de réalisation avantageux de l'invention, lorsque l'élément de butée est prévu sur le flasque, ladite partie périphérique de ce flasque comprend au moins un premier et au moins un second éléments faisant saillie, le premier élément faisant saillie sur la face supérieure de ladite partie périphérique et le deuxième élément faisant saillie sur la face inférieure de ladite partie périphérique.

Préférentiellement, le premier et le deuxième éléments sont alors prévus essentiellement dans le même plan transversal.

Selon une autre variante préférentielle de l'invention, ledit joint périphérique est pourvu d'au moins un bourrelet, la butée et ledit bourrelet étant dimensionnés de façon à maitriser l'écrasement dudit bourrelet. Avantageusement, ledit bourrelet présente ainsi une hauteur au repos supérieure à la hauteur de ladite butée. Un tel bourrelet permet d'assurer l'étanchéité offerte par le joint dans toutes les situations de températures et notamment les grands froids.

Avantageusement, ledit second flasque comprend une partie périphérique, une partie centrale fixée audit élément de matériau filtrant et une partie flexible reliant ladite partie centrale à ladite partie périphérique. Une telle configuration permet d'améliorer le calage de la cartouche au fond du filtre, notamment dans le but d'éviter les situations hyperstatiques de la cartouche pouvant engendrer une détérioration des joints d'étanchéité du filtre, et le cas échéant dans le but de fermer un orifice de vidange automatique prévu dans le fond de cette cuve.

Egalement avantageusement, ledit matériau filtrant est choisi dans le groupe constitué par le papier, le carton, le tissu, les matériaux constitués de fibres tissées ou non tissées ou par un mélange ou une superposition de ces produits et ledit second flasque et ledit premier flasque de ladite cartouche ne sont reliés entre eux que par ledit élément de matériau filtrant. De telles caractéristiques sont utilisées dans les cartouches dites "vertes" décrites ci-dessus qui présentent l'avantage d'être facilement incinérables.

L'invention. ainsi que les différents avantages qu'elle présente, seront plus facilement compris grâce à la description qui va suivre d'un mode non limitatif de réalisation de l'invention en référence aux dessins dans lesquels :
- la figure 1 représente un premier mode de réalisation d'un filtre à huile équipé d'une cartouche de filtrage selon l'invention ;
- la figure 2 représente, un agrandissement de la partie cerclée A sur la figure 1 montrant une coupe de la partie périphérique du second flasque ;
- la figure 3 représente, une vue de dessus du second flasque (une moitié de celui-ci étant représentée, l'autre moitié étant symétrique) ;
- la figure 4 représente un second mode de réalisation d'un filtre pour liquide de refroidissement équipé d'une cartouche de filtrage selon l'invention.
- la figure 5 représente un autre mode de réalisation de l'élément de butée selon l'invention.

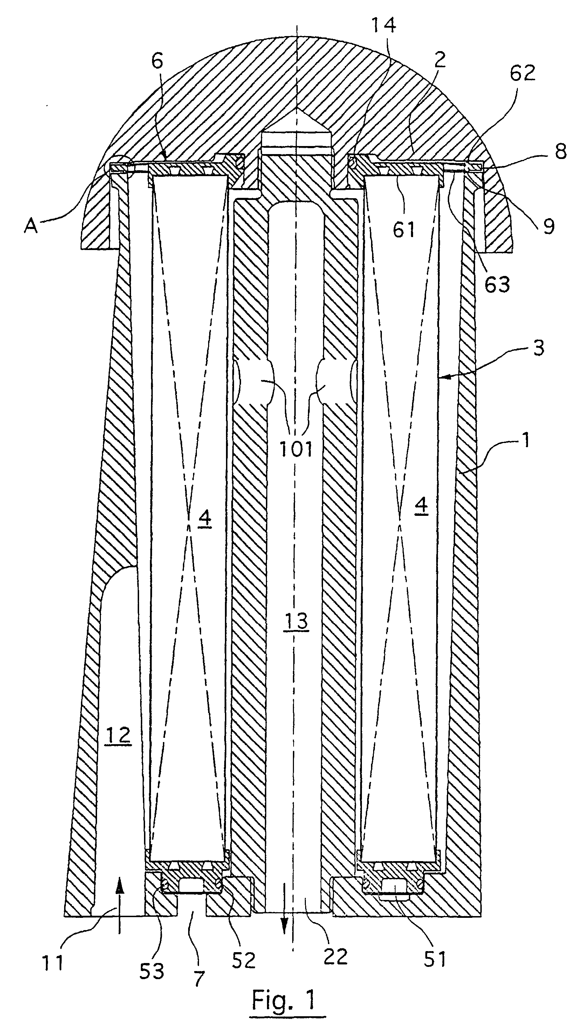

En référence à la figure 1, le filtre représenté comprend quatre éléments principaux, à savoir :
- une cuve 1 destinée à être fixée sur un organe solidaire (non représenté) d'un bloc-moteur d'un véhicule et pourvue d'un orifice d'admission 11 d'un liquide à filtrer (en l'occurrence de l'huile), d'un orifice de sortie du liquide filtré 22 et d'un orifice de vidange 7;
- un élément de fermeture formant couvercle 2 vissé sur la cuve 1 au cours du fonctionnement du filtre ;
- une cartouche de filtrage 3 tubulaire, incluant un second flasque 6 et un premier flasque 5 en matière plastique soudés à chacune des extrémités d'un élément de matériau filtrant 4 constitué par un papier plissé en étoile ; et,
- un noyau central 10 creux pourvu d'ouvertures 101 communiquant avec sa chambre interne, ledit noyau central étant vissé par son extrémité supérieure dans le couvercle 2 de façon à s'étendre selon l'axe longitudinal du filtre, ladite cartouche étant positionnée autour de ce noyau central et calée par celui-ci.

Lors du fonctionnement du filtre, le liquide à filtrer est introduit sous pression dans celui-ci par l'orifice d'admission 11, transite par le compartiment amont 12 de filtration délimité par la paroi intérieure de la cuve 1 et la paroi extérieure de la cartouche 3, est filtré par passage forcé au sein du matériau filtrant 4 et se retrouve dans le compartiment aval 13 de filtration délimité par la lumière longitudinale du noyau central 10, en transitant par les ouvertures 101, avant d'être évacué par l'orifice 22.

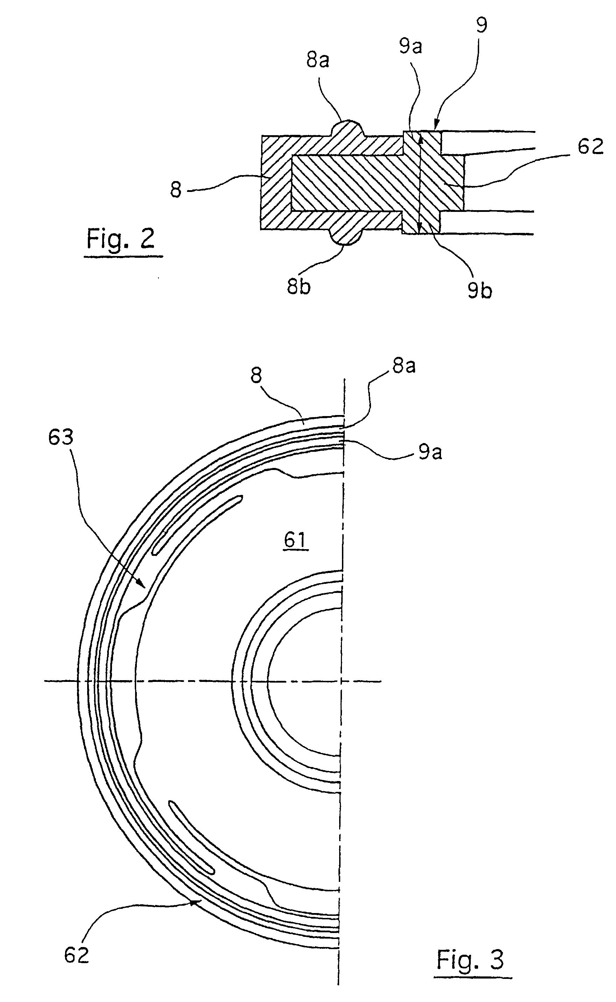

En référence à la figure 2, l'étanchéité supérieure du filtre est obtenue grâce, d'une part, à un joint périphérique 8 intégré à la périphérie du second flasque 6 de la cartouche de filtrage 3 et, d'autre part, à un joint torique interne 14 sur le bord interne de ce même flasque et coopérant avec le couvercle 2.

L'étanchéité inférieure est quant à elle assurée par un joint interne 52 et un joint externe 53 sur le premier flasque 5 de part et d'autre d'une gorge 51 de celui-ci, ladite gorge communiquant avec l'orifice de vidange 7 de la cuve 1.

Comme on peut le voir plus précisément en référence à la figure 3, le second flasque 6 présente trois parties, à savoir une partie centrale 61 directement fixée à l'élément de matériau filtrant 4 (par exemple par collage, incrustation ou soudure, ou toute autre méthode adéquate), une partie périphérique 62 accueillant le joint intégré 8 et une partie flexible 63 ajourée. Comme précisé ci-dessus, un tel flasque flexible permet d'améliorer le calage de la cartouche au fond du filtre, notamment dans le but d'éviter les situations hyperstatiques de la cartouche pouvant engendrer une détérioration des joints d'étanchéité du filtre, et dans le cas présent dans le but de fermer un orifice de vidange 7 automatique prévu dans le fond de cette cuve.

Conformément à la présente invention et comme on peut le voir plus précisément sur la figure 2 et sur la figure 3, le second flasque 6 de la cartouche 3 est doté d'un élément 9 formant butée circulaire constitué par un premier élément 9a faisant saillie sur la face supérieure du flasque 6 et par un deuxième élément 9b faisant saillie sur la face inférieure de ce flasque. Un tel élément de butée permet de maitriser le serrage du couvercle 2 sur la cuve 1 à une valeur fixe et optimale.

Afin d'améliorer les performances du joint intégré 8, celui-ci est muni d'un bourrelet constitué de deux protubérances 8a, 8b, faisant saillie de part et d'autre du joint 8 et dont la hauteur au repos est supérieure à celle des butées 9a, 9b de façon à maîtriser l'écrasement du joint entre le couvercle et la cuve.

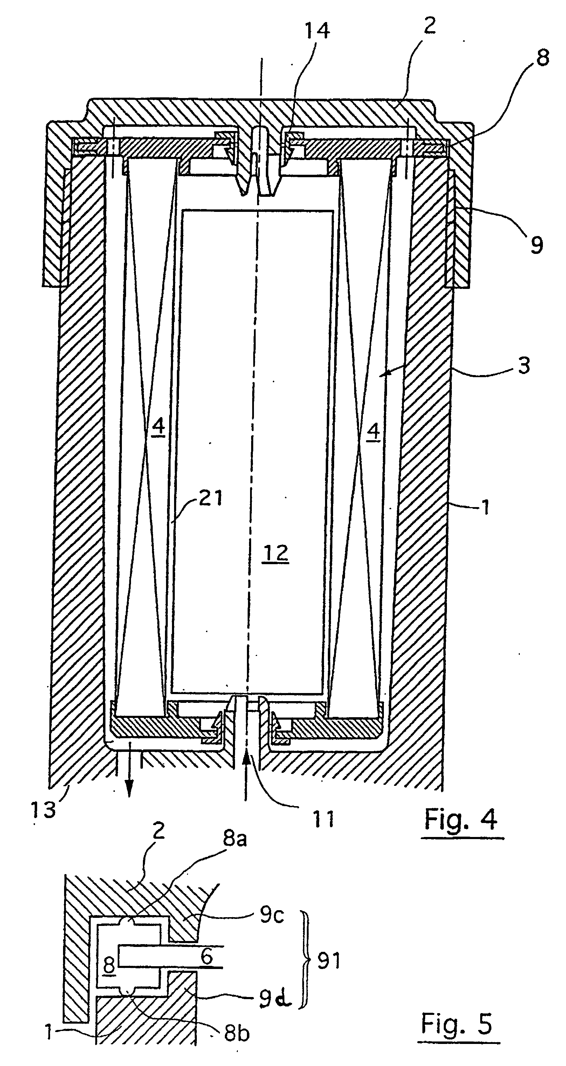

En référence à la figure 4, un second mode de réalisation d'un filtre pour liquide de refroidissement équipé d'une cartouche de filtrage selon l'invention est représenté. Le filtre représenté sur cette figure ne diffère essentiellement du filtre représenté en référence aux figures 1 à 3 que par le sens de filtration mis en oeuvre (symbolisés par les flèches) qui est inverse au sens de filtration du premier mode de réalisation. Selon ce second mode de réalisation, le liquide à filtrer est introduit sous pression dans le filtre par l'orifice d'admission 11 prévu à l'extrémité inférieure d'un cylindre 21 prévu à l'intérieur du matériau filtrant, transite par le compartiment amont 12 de filtration délimité par la lumière longitudinale du cylindre, est filtré par passage forcé au sein du matériau filtrant 4 et se retrouve dans le compartiment aval 13 de filtration délimité par la paroi intérieure de la cuve 1 et la paroi extérieure de la cartouche 3. Conformément à l'invention, l'étanchéité supérieure du filtre est obtenue grâce, d'une part, à un joint périphérique 8 intégré à la périphérie du second flasque 6 de la cartouche de filtrage 3 et, d'autre part, à un joint interne 14 sur le bord interne de ce même flasque et coopérant avec le couvercle 2

En référence à la figure 5, un autre mode de réalisation de l'élément de butée d'un filtre selon l'invention est décrit dans lequel cet élément de butée 91 est constitué par un élément 9c faisant saillie de l'élément de fermeture formant couvercle 2, et par un autre élément 9d faisant saille du bord d'ouverture de la cuve 1. Les éléments 9c et 9d permettent de maîtriser le serrage de la cartouche au niveau du flasque 6 de celle-ci.

## Revendications

1. Filtre pour liquide circulant dans un bloc-moteur ou dans un équipement hydraulique incluant une cuve (1) coopérant avec un élément de fermeture (2) et une cartouche de filtrage (3) insérée dans ladite cuve (1) et calée dans celle-ci par serrage dudit élément de fermeture (2) avec ladite cuve (1), ladite cartouche (3) étant du type comprenant un matériau filtrant (4) terminé à l'une de ses extrémités par un premier flasque (5) et à l'autre de ses extrémités par un second flasque (6) dont la partie périphérique (62) est destinée à être bloquée entre ladite cuve (1) et ledit élément de fermeture (2) lors du serrage de cette cuve (1) avec ledit élément de fermeture (2),
**caractérisé en ce que** ladite partie périphérique (62) dudit second flasque (6) de ladite cartouche de filtrage (3) est pourvue d'un joint intégré périphérique (8) et **en ce que** ledit filtre inclut au moins un élément formant butée (9,91) prévu sur ledit second flasque (6) et/ou sur ledit élément de fermeture (2) et/ou sur ladite cuve (1), ledit élément formant butée (9,91) étant conçu pour maîtriser ledit serrage de ladite cuve (1) avec ledit élément de fermeture (2).

2. Filtre selon la revendication 1 **caractérisé en ce que** ledit élément formant butée (9,9a,9b) est prévu sur ladite partie périphérique (62) dudit second flasque (6)

3. Filtre selon la revendication 1 **caractérisé en ce que** ledit élément formant butée (91) comprend au moins un élément (9c) faisant saillie dudit élément de fermeture (2).

4. Filtre selon l'une quelconque des revendications 1 ou 3 **caractérisé en ce que** ledit élément formant butée (91) comprend au moins un élément (9d) faisant saillie de ladite cuve (1).

5. Filtre selon l'une quelconque des revendications 1 à 4 **caractérisé en ce que** ledit élément formant butée (9,91) est circulaire.

6. Filtre selon l'une quelconque des revendications 2 ou 5 **caractérisé en ce que** ladite partie périphérique (62) dudit second flasque (6) comprend au moins un premier et au m oins un second élément faisant saillie (9a,9b), le premier élément (9a) faisant saillie sur la face supérieure de ladite partie périphérique (62) et le deuxième élément (9b) faisant saillie sur la face inférieure de ladite partie périphérique (62).

7. Filtre selon la revendication 6 **caractérisé en ce que** le premier élément (9a) et le deuxième élément (9b) sont prévus essentiellement dans le même plan transversal.

8. Filtre selon l'une quelconque des revendications 1 à 7 **caractérisé en ce que** ledit joint périphérique (8) est pourvu d'au moins un bourrelet (8a,8b), la butée (9) et ledit bourrelet (8a,8b) étant dimensionnés de façon à maîtriser l'écrasement dudit bourrelet (8a,8b).

9. Filtre selon la revendication 8 **caractérisé en ce que** ledit bourrelet (8a,8b) présente une hauteur au repos supérieure à la hauteur de ladite butée (9).

10. Filtre selon l'une quelconque des revendications 1 à 9 **caractérisé en ce que** ledit second flasque comprend une partie périphérique (62), une partie centrale (61) fixée audit élément de matériau filtrant (4) et une partie flexible (63) reliant ladite partie centrale (61) à ladite partie périphérique (62).

11. Cartouche de filtrage spécialement conçue pour un filtre selon l'une des revendications 2 à 10 du type comprenant un matériau filtrant (4) terminé à l'une de ses extrémités par un premier flasque (5) et à l'autre de ses extrémités par un second flasque (6) dont la partie périphérique (62) est destinée à être bloquée entre ladite cuve (1) et ledit élément de fermeture (2) lors du serrage de cette cuve (1) avec ledit élément de fermeture (2),
**caractérisée en ce que** le second flasque (6) présente une partie périphérique (61) pourvue d'un joint périphérique intégré (8) et **en ce que** ladite cartouche présente au moins un élément formant butée (9) prévu sur ladite partie périphérique (62) dudit second flasque (6).

12. Cartouche de filtrage selon la revendication 11 **caractérisée en ce que** ledit second flasque (6) comprend une partie périphérique (62), une partie centrale (61) fixée audit élément de matériau filtrant (4) et une partie flexible (63) reliant ladite partie centrale à ladite partie périphérique.

## Claims

1. Filter for liquid circulating in an engine block or in hydraulic equipment including a chamber (1) cooperating with a closing element (2) and a filter cartridge (3) inserted into the said chamber (1) and wedged therein by tightening the said closing element (2) onto the said chamber (1), the said cartridge (3) being of the type comprising a filtration material (4) terminated at one of its ends by a first flange (5) and at the other of its ends by a second flange (6) of which the peripheral part (62) is designed to be locked between the said chamber (1) and the said closing element (2) when this chamber (1) is tightened onto the closing element (2),
**characterized in that** the said peripheral part (62) of the said second flange (6) of the said filter cartridge (3) is provided with an integral peripheral seal (8) and **in that** the said filter includes at least one element forming a stop (9,91) provided on the said second flange (6) and/or on the said closing element (2) and/or on the said chamber (1), the said element forming a stop (9,91) being designed so as to control the said tightening of the said chamber (1) onto the said closing element (2).

2. Filter according to claim 1, **characterized in that** the said element forming a stop (9.9a,9b) is provided on the said peripheral part (62) of the said second flange (6).

3. Filter according to claim 1, **characterized in that** the said element forming a stop (91) comprises at least one element (9c) projecting from the said closing element (2).

4. Filter according to either of claims 1 or 3, **characterized in that** the said element forming a stop (91) comprises at least one element (9d) projecting from the said chamber (1).

5. Filter according to any one of claims 1 to 4, **characterized in that** the said element forming a stop (9,91) is circular.

6. Filter according to either of claims 2 or 5 **characterized in that** the said peripheral part (62) of the said second flange (6) includes at least one first element and at least one second projecting element (9a,9b), the first element (9a) projecting on the upper face of the said peripheral part (62) and the second element (9b) projecting on the lower face of the said peripheral part (62).

7. Filter according to claim 6, **characterized in that** the first element (9a) and the second element (9b) are provided substantially in the same transverse plane.

8. Filter according to any one of claims 1 to 7, **characterized in that** the said peripheral seal (8) is provided with at least one bead (8a,8b) the stop (9) and the said bead (8a,8b) being dimensioned so as to control the crushing of the said bead (8a,8b).

9. Filter according to claim 8, **characterized in that** the said bead (8a,8b) has a height in rest greater than the height of the said stop (9).

10. Filter according to any one of claims 1 to 9, **characterized in that** the said second flange includes a peripheral part (62), a central part (61) fixed to the said element of filtration material (4) and a flexible part (63) connecting the said central part (61) to the said peripheral part (62).

11. Filter cartridge especially designed for a filter according to one of claims 2 to 10 of the type comprising a filtration material (4) terminated at one of its ends by a first flange (5) and at the other of its ends by a second flange (6) of which the peripheral part (62) is designed to be locked between the said chamber (1) and the said closing element (2) when this chamber (1) is tightened onto the said closing element (2),
**characterized in that** the second flange (6) has a peripheral part (61) provided with an integral peripheral seal (8) and **in that** the said cartridge has at least one element forming a stop (9) provided on the said peripheral part (62) of the said second flange (6).

12. Filter cartridge according to claim 11, **characterized in that** the said second flange (6) comprises a peripheral part (62), a central part (61) fixed to the said element of filtration material (4) and a flexible part (63) connecting the said central part to the said peripheral part.

## Patentansprüche

1. Filter für in einem Motorblock oder in einer Hydraulikeinrichtung zirkulierende Flüssigkeit, enthaltend ein Gehäuse (1), das mit einem Verschlusselement (2) und einer Filterkartusche (3) zusammenwirkt, die in das Gehäuse (1) eingesetzt und in diesem durch Verspannen des Verschlusselements (2) mit dem Gehäuse (1) befestigt ist, wobei die Kartusche (3) von der Art ist, umfassend ein Filtermaterial (4), das am einen seiner Enden mit einem ersten Flansch (5) und am anderen seiner Enden mit einem zweiten Flansch (6) endet, dessen Umfangsteil (62) dazu bestimmt ist, zwischen dem Gehäuse (1) und dem Verschlusselement (2) beim Verspannen dieses Gehäuses (1) mit dem Verschlusselement (2) festgesetzt zu werden,
**dadurch gekennzeichnet, dass** der Umfangsteil (62) des zweiten Flanschs (6) der Filterkartusche (3) mit einer integrierten Umfangsdichtung (8) versehen ist, und dass der Filter mindestens ein einen Anschlag (9,91) bildendes Element umfasst, das auf dem zweiten Flansch (6) und/oder auf dem Verschlusselement (2) und/oder auf dem Gehäuse (1) vorgesehen ist, wobei das einen Anschlag (9,91) bildende Element konzipiert ist, um das Verspannen des Gehäuses (1) mit dem Verschlusselement (2) zu beherrschen.

2. Filter nach Anspruch 1, **dadurch gekennzeichnet, dass** das einen Anschlag (9,9a,9b) bildende Element auf dem Umfangsteil (62) des zweiten Flanschs (6) vorgesehen ist.

3. Filter nach Anspruch 1, **dadurch gekennzeichnet, dass** das einen Anschlag (91) bildende Element mindestens ein aus dem Verschlusselement (2) überstehendes Element (9c) umfasst.

4. Filter nach einem der Ansprüche 1 oder 3, **dadurch gekennzeichnet, dass** das einen Anschlag (91) bildende Element mindestens ein aus dem Gehäuse (1) überstehendes Element (9d) umfasst.

5. Filter nach Anspruch 4, **dadurch gekennzeichnet, dass** das einen Anschlag (9,91) bildende Element kreisförmig ist.

6. Filter nach einem der Ansprüche 2 oder 5, **dadurch gekennzeichnet, dass** der Umfangsteil (62) des zweiten Flanschs (6) mindestens ein erstes und mindestens ein zweites überstehendes Element (9a,9b) umfasst, wobei das erste Element (9a) auf der Oberseite des Umfangsteils (62) übersteht und das zweite Element (9b) auf der Unterseite des Umfangsteils (62) übersteht.

7. Filter nach Anspruch 6, **dadurch gekennzeichnet, dass** das erste Element (9a) und das zweite Element (9b) im Wesentlichen in derselben Querebene vorgesehen sind.

8. Filter nach einem der Ansprüche 1 bis 7, **dadurch gekennzeichnet, dass** die Umfangsdichtung (8) mit mindestens einem Wulst (8a,8b) versehen ist, wobei der Anschlag (9) und der Wulst (8a,8b) so bemessen sind, dass die Stauchung des Wulstes (8a,8b) beherrscht wird.

9. Filter nach Anspruch 8, **dadurch gekennzeichnet, dass** der Wulst (8a,8b) in Ruhestellung eine Höhe aufweist, die größer ist als die Höhe des Anschlags (9).

10. Filter nach einem der Ansprüche 1 bis 9, **dadurch gekennzeichnet, dass** der zweite Flansch einen Umfangsteil (62), einen an dem Filtermaterialelement (4) befestigten Mittelteil (61) und einen den Mittelteil (61) mit dem Umfangsteil (62) verbindenden flexiblen Teil (63) umfasst.

11. Filterkartusche, speziell konzipiert für einen Filter nach einem der Ansprüche 2 bis 10, von der Art umfassend ein Filtermaterial (4), das am einen seiner Enden mit einem ersten Flansch (5) und am anderen seiner Enden mit einem zweiten Flansch (6) endet, dessen Umfangsteil (62) dazu bestimmt ist, zwischen dem Gehäuse (1) und dem Verschlusselement (2) beim Verspannen dieses Gehäuses (1) mit dem Verschlusselement (2) festgesetzt zu werden,
**dadurch gekennzeichnet, dass** der zweite Flansch (6) einen Umfangsteil (62) aufweist, der mit einer integrierten Umfangsdichtung (8) versehen ist, und dass die Kartusche mindestens ein auf dem Umfangsteil (62) des zweiten Flanschs (6) vorgesehenes, einen Anschlag (9) bildendes Element umfasst.

12. Filterkartusche nach Anspruch 11, **dadurch gekennzeichnet, dass** der zweite Flansch (6) einen Umfangsteil (62), einen an dem Filtermaterialelement (4) befestigten Mittelteil (61) und einen den Mittelteil mit dem Umfangsteil verbindenden flexiblen Teil (63) umfasst.
